# EUROPEAN PATENT APPLICATION

(11) **EP 1 628 410 A1**
(43) Date of publication of application: **22.02.2006**
(21) Application number: 04734118.5
(22) Date of filing: 20.05.2004
(51) Int. Cl.: H04B 1/707

(54) **TRANSMITTER APPARATUS AND COMMUNICATION SYSTEM**

(30) Priority: 20.05.2003 JP 2003142636
(71) Applicant: Intelligent Cosmos Research Institute, Sendai-shi, Miyagi 989-3204 (JP)
(72) Inventor: ADACHI, Fumiyuki, Miyagino-ku Sendai-shi, Miyagi 983-0852 (JP)
(74) Representative: Dr. Weitzel & Partner
(86) International application number: PCT/JP2004/007222
(87) International publication number: WO 2004/105265

(57) **Abstract**

A guard interval insertion processing portion (14) generates a spread signal string in which n signals, the data rates of which are n times a reference data rate that is a predetermined data rate (where n is an integer equal to or greater than two), are arranged in series, and then adds a predetermined portion of a rear part of the generated spread signal string to a front part thereof as a guard interval.

## Description

### Technical Field

The present invention relates to a transmitter apparatus and a communication system, and more particularly to a transmitter apparatus suitable for high-speed digital communication and a communication system comprising this transmitter apparatus.

### Background Art

In recent years, development of a mobile communication industry as typified by a mobile phone has achieved rapid progress. With this rapid progress, various kinds of services based on mobile communication are also diversified. In particular, it is inevitable that needs for mobile communication in future shifts to multimedia communication which integrates not only sounds but also various kinds of data such as texts or images to be transmitted/received, and speeding up of a transmission signal has been demanded with an expected further increase in a quantity of transmission information.

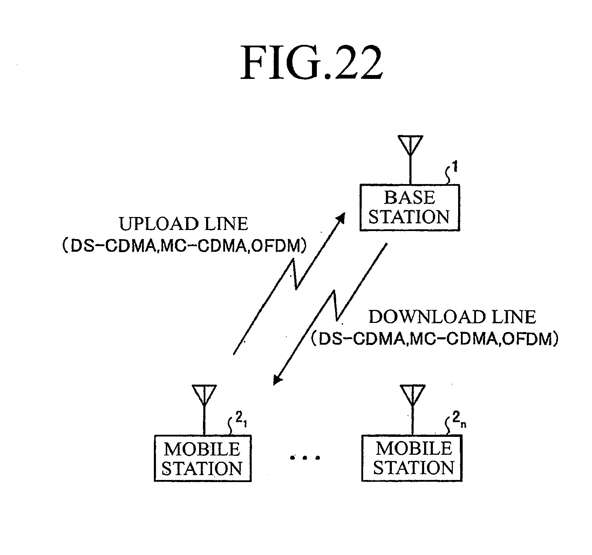

FIG. 22 is a view illustrating communication between a base station and mobile stations. As shown in this drawing, in recent mobile communication, there has been applied a transmission mode such as a DS-CDMA (Direct Sequence-Code Division Multiple Access) transmission mode, an MC-CDMA (Multi Carrier-Code Division Multiple Access) transmission mode or an OFDM (Orthogonal Frequency Division Multiplexing) transmission mode which can reduce influences of frequency selective fading in both of an upload line from a mobile station 2 to a base station 1 and a download line from the base station 1 to the mobile station 2. These transmission modes are separately used based on characteristics of each transmission mode, technical conditions, compatibility conditions with respect to an existing infrastructure, and others.

For example, the DS-CDMA transmission mode (an orthogonal multi-code transmission mode in particular) is characterized in that various transmission rates can be realized by changing a code multiplexing number or a spreading factor, and it actually realizes transmission of data multiple signals of many users in a download link of DS-CDMA transmission in a mobile phone system.

Further, in this DS-CDMA transmission mode, a received-signal power is increased by using a technique called RAKE combination which separates paths having different delay times by reverse-spread processing and gathers the separated signals.

In the above-described various kinds of transmission modes including this DS-CDMA transmission mode, various improvements are added based on wide-ranging studies so far, thereby resulting in many achievements. Consequently, there are many gazettes intended to improve these transmission modes (e.g., Patent References 1 to 5 and others).

### Patent Reference 1

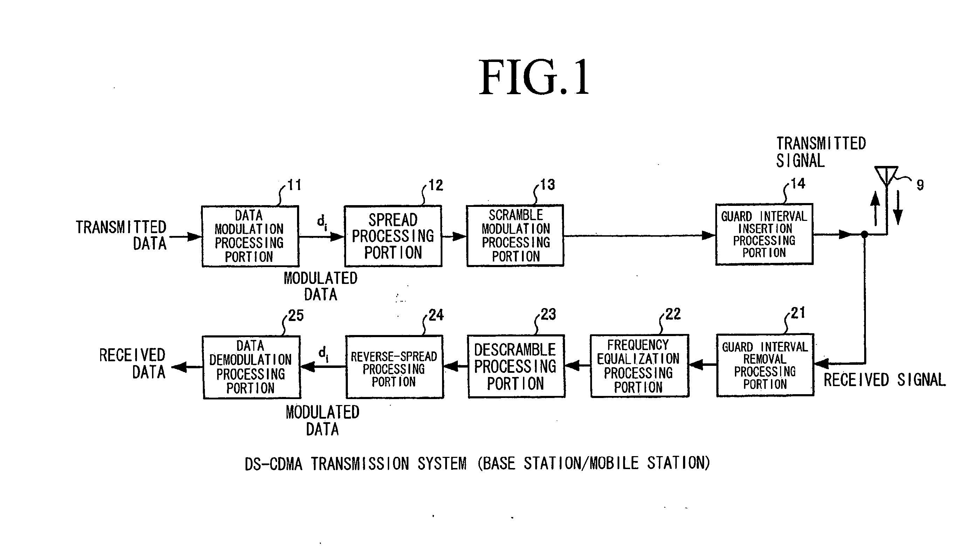

Japanese Patent Application Laid-open No. 2000-004211 (e.g., pp. 4-5, FIG. 1 and others)

### Patent Reference 2

Japanese Patent Application Laid-open NO. 126380-1998 (e.g., pp. 3-12, FIG. 1 and others)

### Patent Reference 3

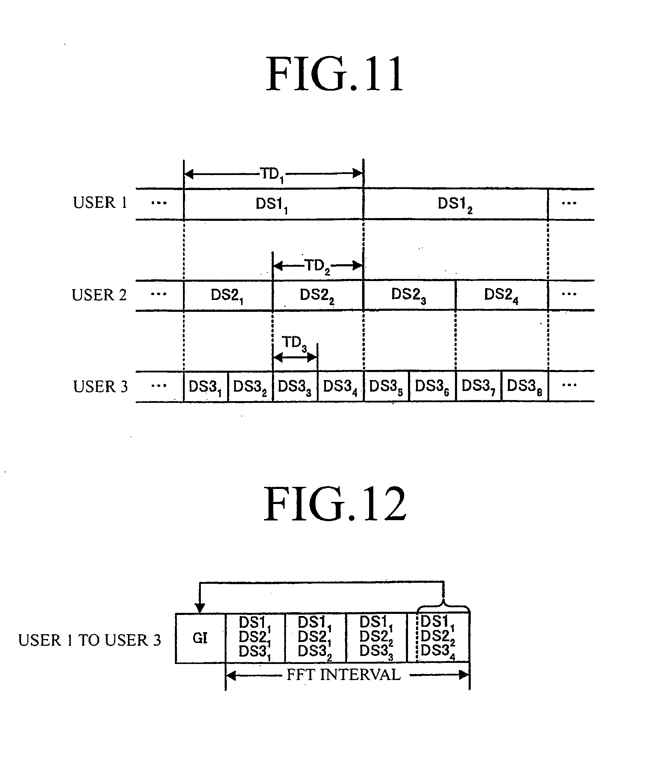

Japanese Patent Application Laid-open No. 2003-92560 (e.g., pp. 4-6, FIG. 11 and others)

### Patent Reference 4

Japanese Patent Application Laid-open No. 2003-110519 (e.g., pp. 3-5, FIG. 1 and others)

### Patent Reference 5

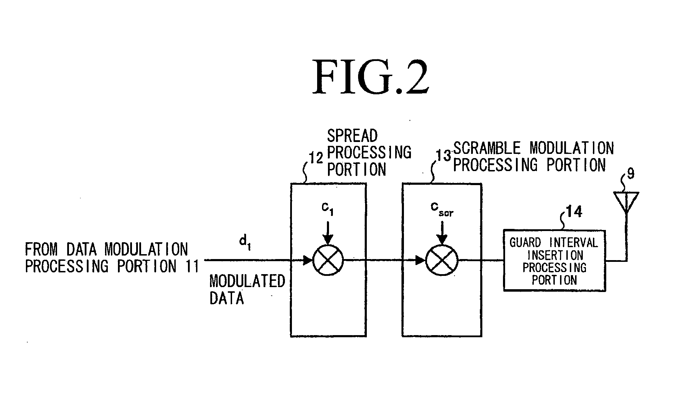

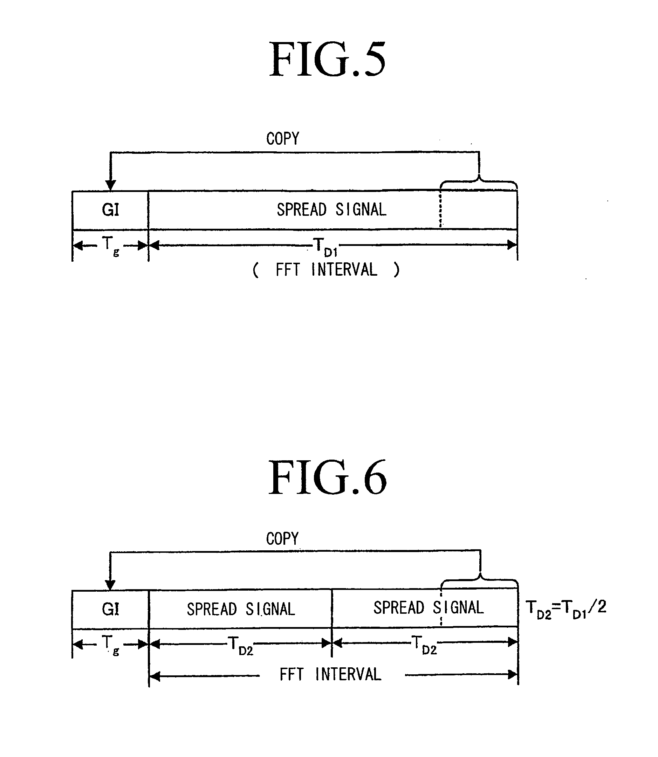

Japanese Patent Application Laid-open No. 2002-345035 (e.g., pp. 6-12, FIGS. 2 and 5)

However, most of techniques disclosed in the above-described respective patent references relate to an improvement in a digital communication technology (2G (a second-generation technology)) in the 1990s which forms a main stream of current mobile phones or a digital communication technology (3G (a third-generation technology)) in the 2000s as typified by IMT-2000 (International Mobile Telecommunication-2000), and there are few references disclosing technologies which are intended to be applied to a fourth-generation high-speed digital communication (e.g., a moving condition: 100 Mb/s, a still condition: 1 Gb/s) or to high-speed multimedia communication (e.g., simultaneous communication of texts, sounds, images and others).

Considering a future (from the third generation to the fourth generation) high-speed multimedia communication system, there are many technical problems to be solved. In particular, handling of an increase in a data rate of a transmission signal and handling of a strict power restriction are important problems, but it is necessary to flexibly and accurately respond to these problems.

For example, in the above-described DS-CDMA transmission mode using RAKE combination, since the number of paths which should be separated is increased with an increase in a data rate of a transmission signal, many correlators are required for RAKE combination.

In the RAKE combination, an amplitude and a phase of each path must be estimated to perform in-phase combination of correlator outputs. However, when the number of paths is increased, since an average signal power of the respective paths is reduced, an amplitude and a phase of each delay path cannot be accurately estimated, and collapse of code orthogonality due to interference between delay paths becomes considerable, thereby resulting in a problem that transmission characteristics are deteriorated.

On the other hand, although it is necessary to cope with a strict power restriction in addition to an increase in a data rate, coping with an increase in a data rate and handling the strict power restriction have a close relationship. For example, it is said that a peak transmission power in case of transmitting modulated data of 64 kbps in a 5-GHz band becomes approximately 90 times a counterpart in case of transmitting modulated data of 8 kbps in a 2-GHz band.

Therefore, in the future high-speed multimedia communication system, although a transmission power of a transmission signal which is individually transmitted from a mobile station must be restricted, a cell radius of a communication cell must be reduced based on a concept of processing using a prior art, which means that a design of an existing working infrastructure must be greatly changed. Further, this also means that an enormous cost is required when shifting from an existing system to a new system.

In view of the above-described problems, it is an object of the present invention to provide a transmitter apparatus and a communication system which can accurately cope with an increase in a data rate and a transmission power restriction and flexibly and easily realize shifting to a future high-speed multimedia communication system.

### Disclosure of the Invention

According to one aspect of the present invention, there is provided a transmitter apparatus comprising a guard interval insertion processing portion and performing communication based on a predetermined transmission mode by using a data frame, the guard interval insertion processing portion generating the guard frame in which a predetermined part of a rear portion of a spread signal having a predetermined data rate is added to a front portion thereof as a guard interval, the spread signal being obtained by subjecting modulated data to spread modulation using a spread code, wherein the guard interval insertion processing portion generates a spread signal string in which n spread signals, the data rates of which are n times a reference data rate that is the predetermined data rate (where n is an integer equal to or greater than two), are arranged in series, and adds a predetermined part of a rear chip of the generated spread signal string to a front portion of the spread signal string as a guard interval.

According to the present invention, the guard interval insertion processing portion generates a spread signal string in which n signals, the data rates of which are n times a reference data rate that is a predetermined data rate (where n is an integer equal to or greater than two), are arranged in series, and then adds a predetermined portion of a rear part of the generated spread signal string to a front part thereof as a guard interval.

According to another aspect of the present invention, there is provided a communication system comprising: a transmitter apparatus which comprises a guard interval insertion processing portion and transmits a DS-CDMA signal by using a generated data frame, the guard interval insertion processing portion generating the data frame in which a predetermined part of a rear portion of a spread signal having a predetermined data rate is added to a front portion thereof as a guard interval, the spread signal being obtained by subjecting modulated data to spread modulation using a spread code; and a receiver apparatus which receives the DS-CDMA signal transmitted from the transmitter apparatus, generates a spread signal in which the guard interval is removed from the received DS-CDMA communication signal, and performs frequency equalization processing based on FFT processing with respect to the generated spread signal with an inverse number of the predetermined data rate being determined as an FFT interval length, wherein the guard interval insertion processing portion generates a spread signal string in which n spread signals, the data rates of which are n times a reference data rate that is the predetermined data rate (where n is an integer equal to or greater than two), are arranged in series, and adds a predetermined part of a rear portion of the generated spread signal string to a front portion of the spread signal string as a guard interval.

According to the present invention, in the communication system comprising: the transmitter apparatus which comprises the guard interval inserting processing portion and transmits a DS-CDMA signal, the guard interval insertion processing portion generating a data frame by adding a predetermined portion of a rear part of a spread signal to a front part of the same as a guard interval, the spread signal with a predetermined data rate being obtained by subjecting modulated data to spread modulation using a spread code; and the receiver apparatus which performs frequency equalization processing with respect to a spread signal obtained by removing the guard interval from the received DS-CDMA communication signal based on FFT processing with an inverse number of the predetermined data rate being determined as an FFT interval length, the guard interval insertion processing portion generates a spread signal string in which n signals, the data rates of which are n times a reference data rate that is a predetermined data rate (where n is an integer equal to or greater than two), are arranged in series, and then adds a predetermined portion of a rear part of the generated spread signal string to a front part thereof as a guard interval.

### Brief Description of the Drawings

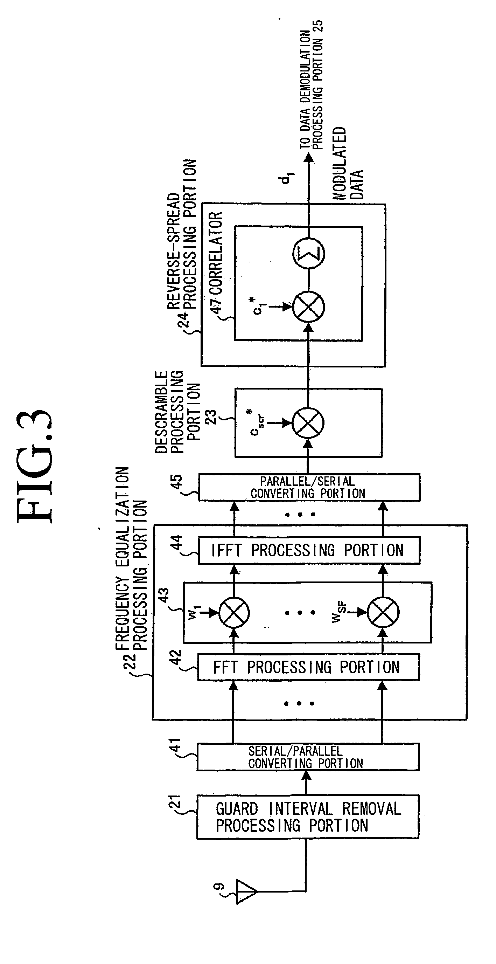

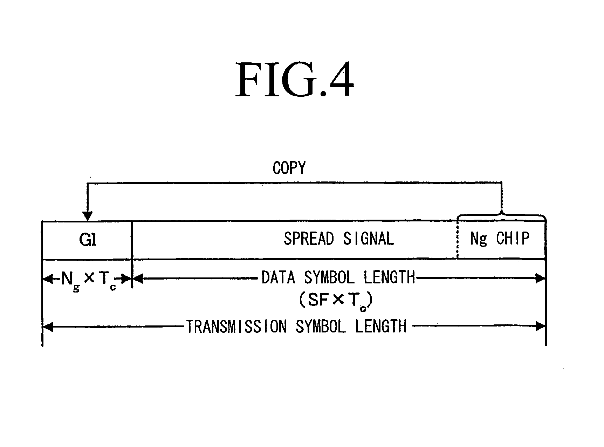

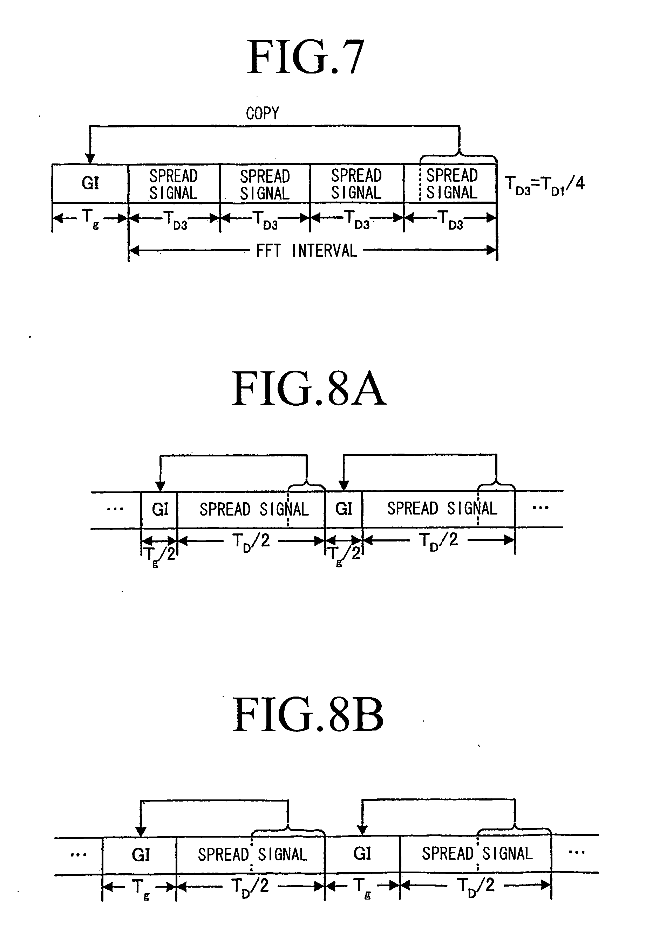

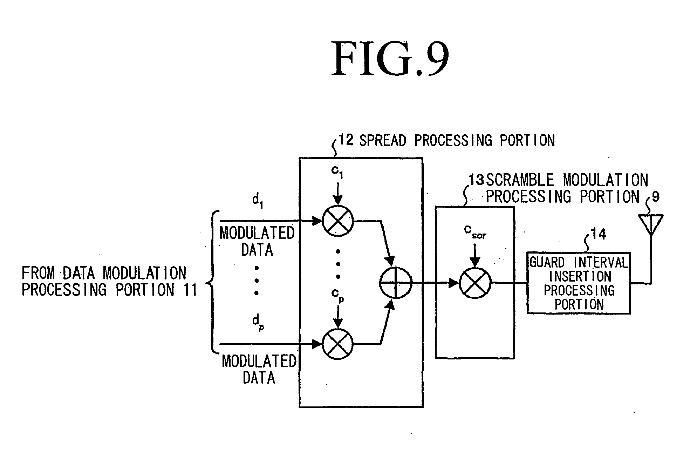

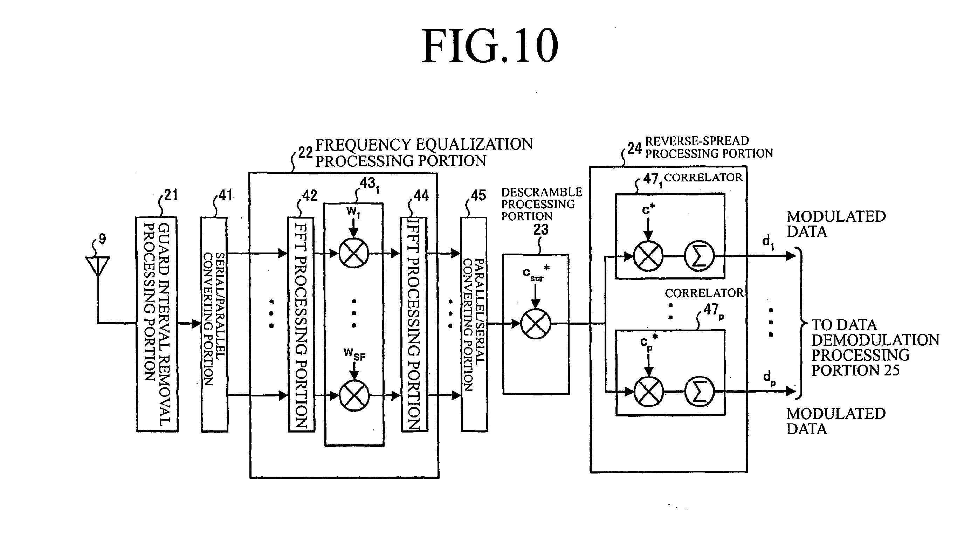

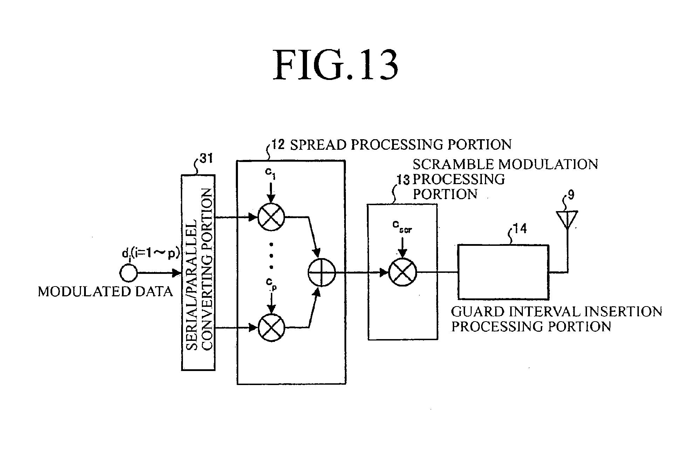

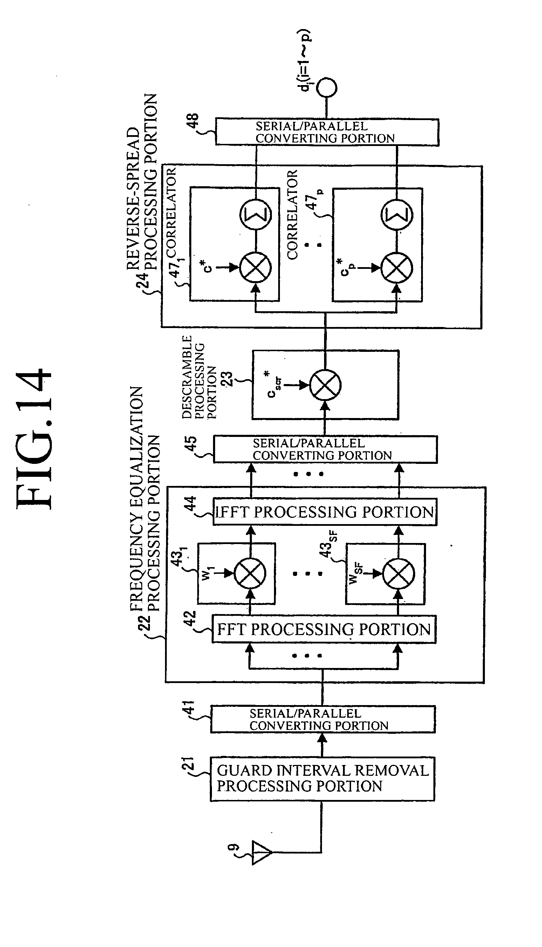

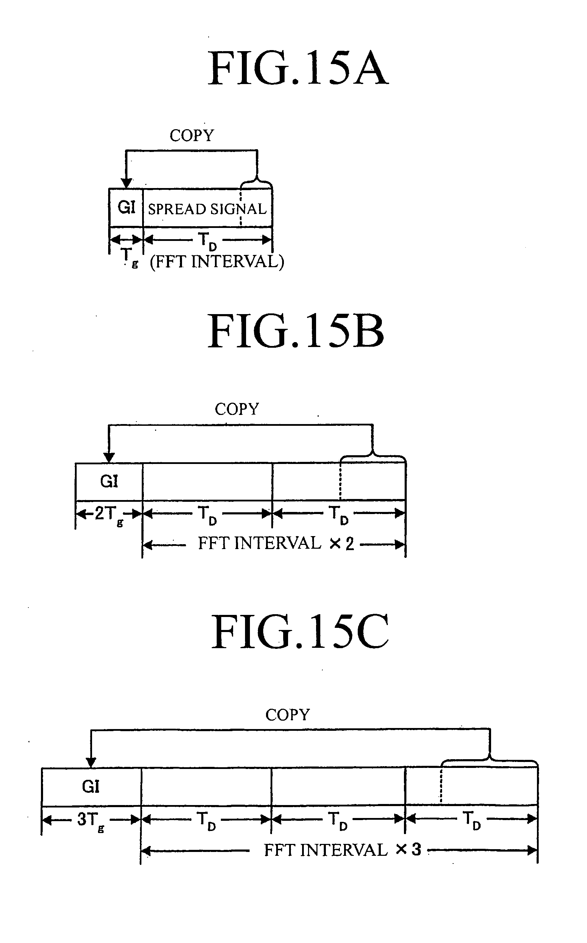

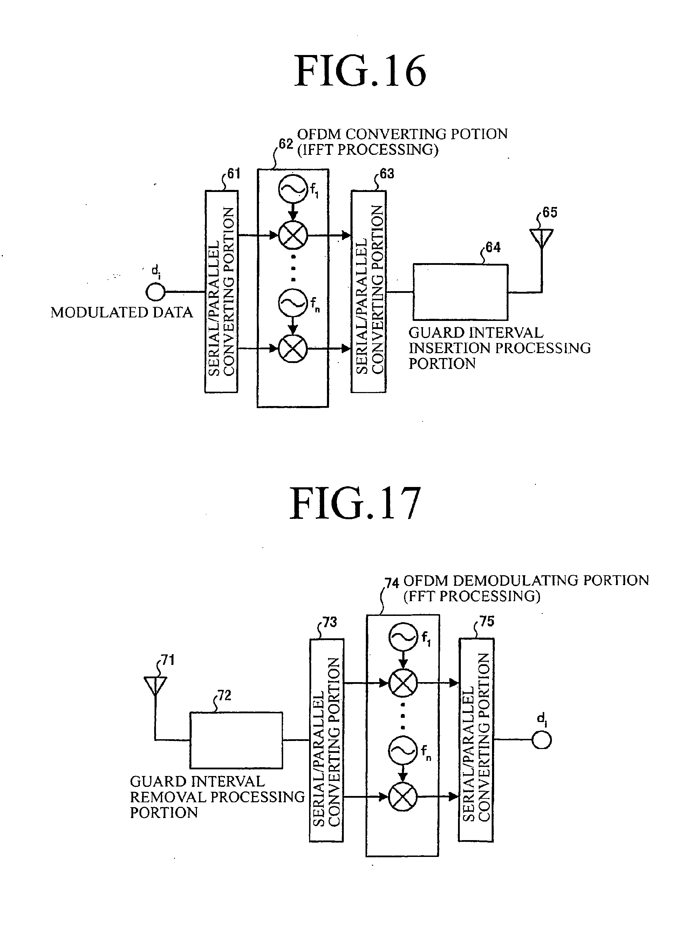

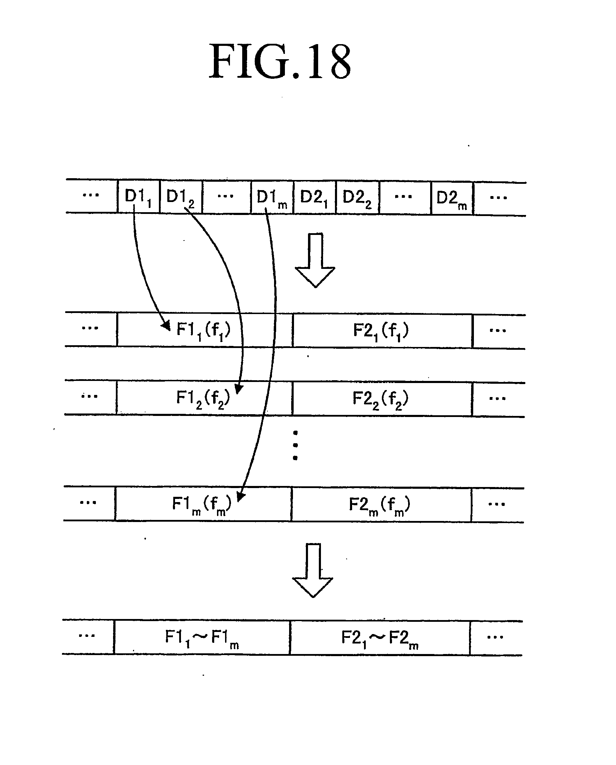

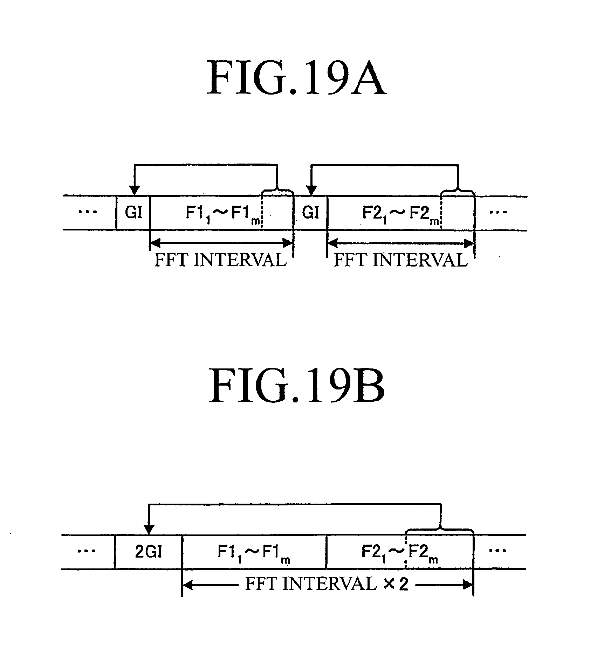

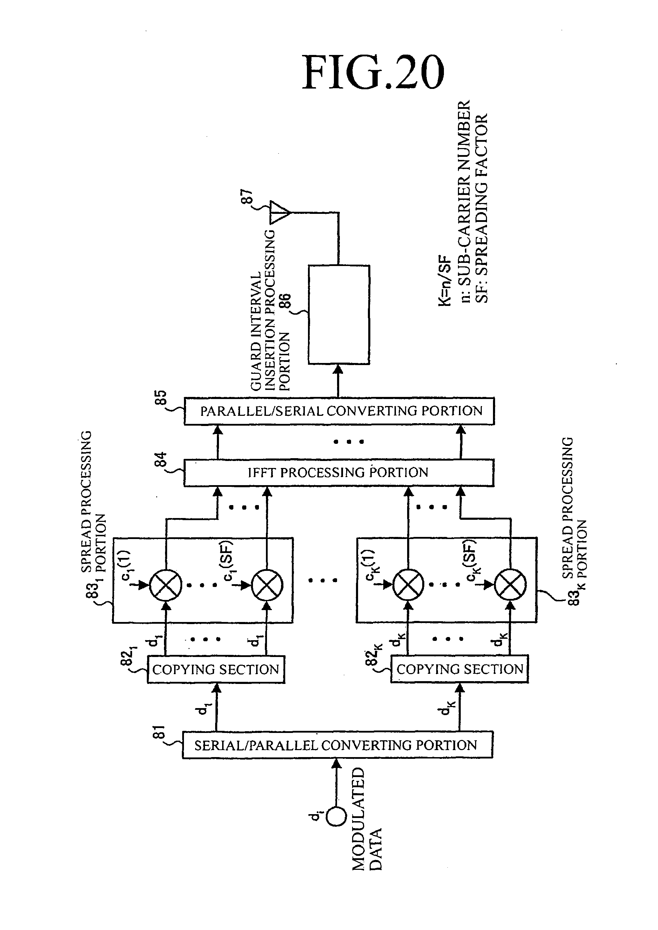

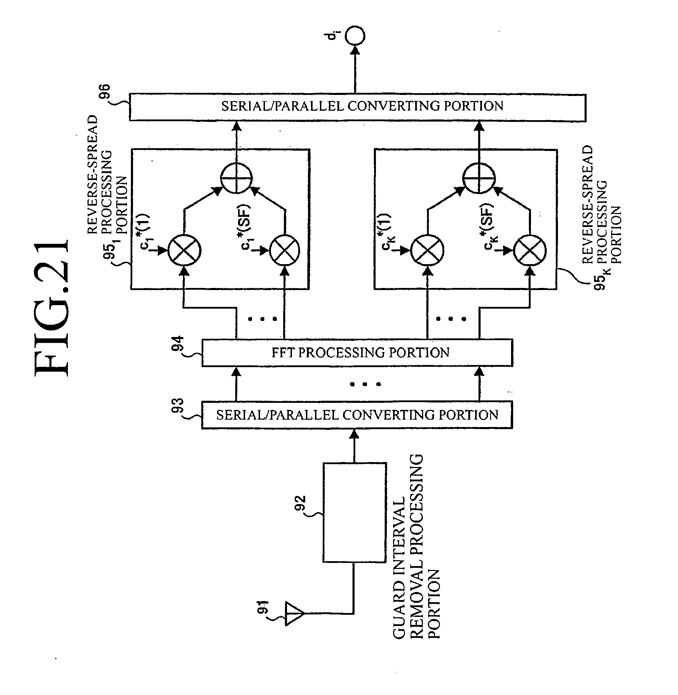

FIG. 1 is a block diagram showing a configuration of an optical receiver apparatus according to Embodiment 1 of the present invention; FIG. 2 is a block diagram illustrating an outline of processing of a transmitter system in single-code DS-CDMA transmission; FIG. 3 is a block diagram illustrating an outline of processing of a receiver system in the single-code DS-CDMA transmission; FIG. 4 is a structural view showing a data frame of a DS-CDMA signal having a guard interval (GI) added thereto; FIG. 5 is a view showing a configuration of a data frame of a single-code DS-CDMA transmission signal in which a guard interval (GI) is inserted; FIG. 6 is a view showing a configuration of a data frame when a spreading factor of a spread signal is 1/2 of that in FIG. 5; FIG. 7 is a view showing a configuration of a data frame when a spreading factor of a spread signal is 1/4 of that in FIG. 5; FIG. 8A is a view showing a configuration of a data frame in cases where a guard interval whose length is 1/2 of a reference guard interval length (T_{g}) is added when a data rate is two times (T_{D}: a data symbol length); FIG. 8B is a view showing a configuration of a data frame in cases where a guard interval having a reference guard interval length is added when a data rate is two times; FIG. 9 is a block diagram illustrating an outline of processing of a transmitter system in multi-code DS-CDMA transmission; FIG. 10 is a block diagrams illustrating an outline of processing of a receiver system in the multi-code DS-CDMA transmission; FIG. 11 is a view showing a case where a data rate of a spread signal varies in accordance with each of a plurality of users; FIG. 12 is a view illustrating GI insertion processing with respect to a superimposed signal on which spread signals having different data rates are superimposed; FIG. 13 is a block diagram illustrating an outline of processing of a transmitter system with respect to serial input in the multi-code DS-CDMA transmission; FIG. 14 is a block diagram illustrating an outline of processing of a receiver system with respect to serial input in the multi-code DS-CDMA transmission; FIGS. 15A to C are views showing configurations of data frames according to Embodiment 3; FIG. 16 is a block diagram illustrating an outline of processing of a transmitter system in OFDM transmission; FIG. 17 is a block diagram illustrating an outline of processing of a receiver system in OFDM transmission; FIG. 18 is a view conceptually showing a data configuration of an OFDM signal; FIG. 19A is a view showing a data frame of an OFDM signal produced by general guard interval insertion processing; FIG. 19B is a view showing a data frame of an OFDM signal produced by guard interval insertion processing according to Embodiment 4; FIG. 20 is a block diagram illustrating an outline of processing of a transmitter system inn MC-CDMA transmission; FIG. 21 is a block diagram illustrating an outline of processing of a receiver system in the MC-CDMA transmission; and FIG. 22 is a view illustrating communication between a base station and mobile stations.

### Best Mode for Carrying out the Invention

Preferred embodiments of a transmitter apparatus and a communication system according to the present invention will now be described in detail hereinafter with reference to the accompanying drawings. It is to be noted that the present invention is not restricted by the embodiments.

### Embodiment 1.

FIG. 1 is a block diagram showing a configuration of a DS-CDMA transmission type (base station/mobile station) transmitter/receiver apparatus which performs frequency equalization processing. The transmitter/receiver apparatus shown in this drawing comprises: a transmitter system (an upper part in the drawing) which transmits a transmission signal (a DS-CDMA signal) through a transmission/reception antenna 9; and a receiver system (a lower part in the drawing) which receives a reception signal (a DS-CDMA signal) through the transmission/reception antenna 9.

In FIG. 1, the transmitter system comprises: a data modulation processing portion 11 which generates modulated data (dᵢ) obtained by subjecting transmission data to primary modulation such as PSK modulation or QAM modulation; a spread processing portion 12 which generates a spread signal from this modulated data; a scramble modulation processing portion 13 which performs modulation using a scramble code with respect to this spread signal; and a guard interval insertion processing portion 14 which adds a redundant signal called a guard interval to a signal output from the scramble modulation processing portion 13.

On the other hand, the receiver system performs processing which is completely opposite to that carried out in the transmitter system, and comprises processing portions corresponding to such processing. That is, the receiver system comprises: a guard interval removal processing portion 21 which removes a guard interval from a received signal received through the transmission/reception antenna 9; a frequency equalization processing portion 22 which performs equalization processing with respect to a signal output from the guard interval removal processing portion 21 in a frequency domain; a descramble processing portion 23 which reconverts a broadband signal of a pseudo noise series output from the frequency equalization processing portion 22 into a spread signal; a reverse-spread processing portion 24 which generates original modulated data with respect to the spread signal output from the descramble processing portion 23; and a data demodulation processing portion 25 which demodulates the modulated data output from the reverse-spread processing portion 24.

An operation of this transmitter/receiver apparatus will now be described with reference to FIGS. 2 and 3. FIG. 2 is a block diagram illustrating an outline of processing of the transmitter system in single-code DS-CDMA transmission, and FIG. 3 is a block diagram illustrating an outline of processing of the receiver system in the single-code DS-CDMA transmission.

In FIG. 2, modulated data (d₁) output from the data modulation processing portion 11 is input to the spread processing portion 12. The spread processing portion 12 multiplies the modulated data by an orthogonal spread code series (C₁) of, e.g., W-H (Walsh-Hadamard) type codes, thereby generating a spread signal. The scramble modulation processing portion 13 multiplies this spread signal by a scramble code (C_{scr}) of an M series or the like. This scramble modulation processing is carried out in order to convert a signal series generated as spread signals into signals in a pseudo noise series. The guard interval insertion processing portion 14 adds a redundant signal called a guard interval to the pseudo noise signal generated by the scramble modulation processing portion 13. This guard interval insertion processing is performed in order to avoid interference between symbols caused due to a multi-path. The signal having this guard interval added thereto is transmitted from the transmission/reception antenna 9 as a transmission signal.

In FIG. 3, the guard interval of the signal with the guard interval received through the transmission/reception antenna 9 is removed in the guard interval removal processing portion 21. The signal from which the guard interval has been removed is input to the frequency equalization processing portion 22 comprising an FFT processing portion 42, a weighting processing portion 43 and an IFFT processing portion 44 through a serial/parallel converting portion 41. In the frequency equalization processing portion 22, a parallel signal of a time domain output from the serial/parallel converting portion 41 is converted into a signal of a frequency domain by the FFT processing portion 42, subjected to weighting processing, i.e., frequency equalization processing in the weighting processing portion 43, and then reconverted into the signal of the time domain by the IFFT processing portion 44. The signal reconverted into the time domain signal by the equalization processing in the frequency domain by the frequency equalization processing portion 22 is converted into a serial signal by a parallel/serial converting portion 45, and input to the descramble processing portion 23. In the descramble processing portion 23, a broadband signal of a pseudo noise series is converted into a spread signal by using a scramble code (C_{scr}*) which is complex-conjugate with the scramble code (C_{scr}) used in the transmitter system, and input to the reverse-spread processing portion 24. The reverse-spread processing portion 24 has a correlator 47 which is realized by a sliding correlator or a matched filter. In the correlator 47, modulated data is generated from the spread signal by using an orthogonal spread code series (C₁*) which is complex-conjugate with the orthogonal spread code series (C₁) used in the transmitter system, and output to the data demodulation processing portion 25.

Meanwhile, in an MC-CDMA transmission mode or an OFDM transmission mode, inverse fast Fourier transformation (IFFT:Inverse Fast Fouier Transform) processing is executed on the transmission side in order to transmit a multi-carrier signal using a sub-carrier. Moreover, in recent years, in the DS-CDMA transmission mode, FFT processing which performs frequency domain equalization processing may be performed on the reception side in some cases.

In order to apply this FFT processing on the reception side, a received signal must be able to be processed as a periodic signal within a time of the FFT processing. However, in mobile communication, a transmission path is generally constituted of a plurality of delay paths having different delay times. Thus, there is required processing which allows the received signal to be handled as a periodic signal. FIG. 4 shows this processing. That is, FIG. 4 is a structural view of a data frame of a DS-CDMA signal having a guard interval (GI) added thereto.

The guard interval is inserted in order to avoid interference between data frames caused due to such a plurality of delay paths having different delay times, and a length of the guard interval is set in accordance with a maximum delay time in a transmission path. If the maximum delay time is within the guard interval, it can be considered that the received signal has a periodic waveform within a time of the FFT processing.

As shown in FIG. 4, on the transmission side, an Ng chip at the end of a chip series of a spread signal which has been spread by a spread code is copied, and the copied chip is added to the top of the data frame as the guard interval (GI). Here, a high-speed data series subjected to band expansion by a spread code is called a chip series, and a minimum unit of this data series is one chip. For example, a period 256 chip means that a band of one bit is expanded to a 256 times band by spread coding. Assuming that a chip length (a length of one chip) is T_{c}, a guard interval length T_{g} is represented by an expression T_{g} = N_{g} × T_{c}. Additionally, when a spreading factor is expressed by SF (Spreading Factor), a data symbol length which is a spread signal length of one bit is SF × T_{c}. As a result, a transmission symbol length which is a data length of the modulated data having the guard interval added thereto is (N_{g}+SF) × T_{c}. With insertion of this guard interval, transmission efficiency is SF/(SF+N_{g}), and a power loss of N_{g}/(SF+N_{g}) is generated. That is, when a length of the guard interval is too long as compared with the spreading factor, the transmission efficiency is lowered, and a large power loss is generated.

FIG. 5 is a view showing a configuration of a data frame of a single-code DS-CDMA transmission signal having a guard interval (GI) inserted therein. As shown in the drawing, in this data frame, a chip series at the end of a spread signal is copied, and added to the top of the data frame as a guard interval. It is to be noted that T_{D1} is a data symbol length, and matches with a length of an FFT interval which is processed in the FFT processing portion 42 of the frequency equalization processing portion 22 in the receiver system. That is, in the data frame shown in this drawing, the number of samples used in the FFT processing is equal to the spreading factor SF, and one chip subjected to spread processing corresponds to one sample which is a target of the FFT processing. Further, assuming that the spreading factor of a spread signal is 128 and 32 chips are used as a guard interval, a data frame length corresponds to 160 chips, and the transmission factor in this example is 128/(128+32) = 0.8.

On the other hand, FIG. 6 is a view showing a configuration of a data frame when a spreading factor of a spread signal is 1/2 of that in FIG. 5, and FIG. 7 is a view showing a configuration of a data frame when a spreading factor of a spread signal is 1/4 of that in FIG. 5. In the example depicted in FIG. 6, a data rate is doubled since the spreading factor is 1/2. For example, assuming that a modulation speed of original data of the spread signal shown in FIG. 5 is 128 kb/s, a modulation speed of original data of the spread signal depicted in FIG. 6 is 256 kb/s. At this time, the guard interval insertion processing portion 14 generates a spread signal string in which two spread signals are arranged in series, and adds a predetermined part of a rear portion of this spread signal string to a front portion of the spread signal string as a guard interval. Furthermore, calculating the transmission efficiency in this example by using the above-described numeric values, (64×2)/(64/2+32) = 0.8 is obtained, and the transmission efficiency of data transmission using the data frame shown in FIG. 5 is maintained.

Moreover, in the example depicted in FIG. 7, a data rate quadruples since the spreading factor is 1/4, and a modulation speed of original data of the spread signal is 512 kb/s. At this time, the guard interval insertion processing portion 14 generates a spread signal string in which four spread signals are arranged in series, and adds a predetermined part of a rear portion of this spread signal string to a front portion of the spread signal string as a guard interval. Like the above example, calculating the transmission efficiency, (32×4)/(32×4+32) = 0.8 can be obtained, and the transmission efficiency of data transmission using the data frame depicted in FIG. 5 is maintained.

Meanwhile, in a concept of the guard interval insertion processing applied to an OFDM transmission signal or the like, processing is carried out so that one guard interval is given with respect to one spread signal string for each modulation data. FIGS. 8 are views showing a configuration of each data frame of a DS-CDMA signal generated by the guard interval insertion processing applied to this OFDM signal or the like. That is, FIG. 8A is a view showing a configuration of a data frame in cases where a guard interval having a length corresponding to 1/2 of a reference guard interval length (T_{g}) is added when a data rate is doubled (T_{D}: a data symbol length), and FIG. 8B is a view showing a configuration of each data frame in cases where a guard interval having the reference guard interval length is added when a data rate is doubled.

In FIG. 8A, a length of the guard interval is reduced to 1/2 so as not to decrease transmission efficiency when a data rate is doubled. Calculating the transmission efficiency in this example, 64/(64+16) = 0.8 is obtained, and the transmission efficiency (0.8) in the guard interval insertion processing shown in FIG. 6 is maintained, but the length of the guard interval corresponds to 16 chips only, thereby being susceptible to delay paths.

Further, transmission efficiency in FIG. 8B is 64/(61+32) #1 0.67, which is lower than the transmission efficiency (0.8) in the guard interval insertion processing depicted in FIG. 6. Its reason comes from the fact that the length of the guard interval is fixed even if the data rate is doubled, and hence an overhead of the guard interval is increased, thereby lowering the transmission efficiency.

On the other hand, in the guard interval insertion processing shown in FIGS. 6 and 7, since a predetermined part of a rear portion of a signal string in which n signals, the data rates of which are n times a reference data rate (where n is an integer equal to or greater than two), are arranged in series is added to a front portion of the spread signal string as a guard interval, it is possible to carry out the effective guard interval insertion processing which is not affected by delay paths without lowering the transmission efficiency.

It is to be noted that FIGS. 6 and 7 illustrate the examples in which the data rates are two times and four times, but the data rate may be an arbitrary integral multiple. That is, it is good enough for the guard interval insertion processing portion 14 to generate a spread signal string in which n spread signals, the data rates of which are n times a reference data rate that is a predetermined data rate (where n is an integer equal to or greater than two), are arranged in series, and add a predetermined part of a rear portion of this spread signal string to a front portion of this spread signal string as a guard interval.

Further, although FIG. 2 shows the example where the spread processing portion 12 multiplies the modulated data by the orthogonal spread code series of, e.g., a W-H series code to generate the spread signal, the spread signal generated in this example is not restricted to the spread signal spread by the orthogonal spread code and may be a spread signal spread by an arbitrary spread code.

Furthermore, in FIG. 6, a length of the spread signal string in which two spread signals are arranged in series is T_{D2} × 2 = T_{D1}, and equal to a length of the FFT interval. Therefore, even if this data frame is used, there is no influence on the processing portions other than the reverse-spread processing portion 24, and this data frame can be used as it is without changing the processing portions in the receiver system. Moreover, it is good enough for the reverse-spread processing portion 24 that information of a data rate with which a spread code is used is clear together with information of the spread code, and processing in a regular correlator is possible.

Additionally, even if signals having, e.g., different data rates shown in FIGS. 5 to 7 simultaneously exist as DS-CDMA transmission signals, correlation processing in the reverse-spread processing portion 24 can be carried out by using information of spread codes and information of data rates. Therefore, even if signals having different data rates simultaneously exist, these signals can be transmitted, thereby facilitating realization of a future multimedia communication system.

As described above, according to the transmitter apparatus and the communication system of this embodiment, since the guard interval insertion processing portion provided in the transmitter apparatus generates a spread signal string in which n spread signals, the data rates of which are n times a reference data rate which is a predetermined data rate (where n is an integer equal to or greater than two), are arranged in series and then adds a predetermined part of a rear portion of the generated spread signal string to a front portion of the spread signal string as a guard interval, thereby performing effective guard interval insertion processing which does not lower transmission efficiency. Further, the present invention can be applied to a communication system in which signals having different data rates simultaneously exist, and hence a future high-speed multimedia communication system can be readily and flexibly realized.

### Embodiment 2.

Although the description has been given as to the guard interval insertion processing in the single-code DS-CDMA transmission system in Embodiment 1, processing in a multi-code DS-CDMA transmission system will be explained in Embodiment 2. It is to be noted that FIG. 9 is a block diagram illustrating an outline of processing of a transmitter system in multi-code DS-CDMA transmission, and FIG. 10 is a block diagram illustrating an outline of processing of a receiver system in the multi-code DS-CDMA transmission.

In the receiver system according to this embodiment shown in FIG. 9, there are plurality of sets of modulated data which are input to a spread processing portion 12, and a spread signal generated as a result of combining a plurality of orthogonal spread code series (C₁ to C_{P}) in the spread processing portion 12, and this signal is output to a scramble modulation processing portion 13. It is to be noted that any other structures are the same as those in Embodiment 1, and like reference numerals denote these portions.

Moreover, in a transmitter system according to this embodiment shown in FIG. 10, a reverse-spread processing portion 24 comprises a plurality of correlators 47₁ to 47_{P}, a plurality of sets of modulated data are generated from spread signals by using orthogonal spread code series (C₁* to C_{P}*) which are complex-conjugate with a plurality of orthogonal spread code series (C₁ to C_{P}), and the generate sets of data are then output to a data demodulation processing portion 25. It is to be noted that any other configurations are equal to or similar to those in Embodiment 1, and like reference numerals denote these portions.

FIG. 11 is a view showing an example where data rates of spread signals are different in accordance with a plurality of users. As shown in the drawing, data symbol lengths of spread signals output from each of users 1 to 3 have a relationship of T_{D1} = 2T_{D2} = 4T_{D4}, and this corresponds to a relationship of the user 1:the user 2:the user 3 = 1:2:4 in terms of data rates. The spread signals having data rates which are different in accordance with each of these users are combined with each other in a spread processing portion 12, and a combined signal is converted into a pseudo noise series signal by a scramble modulation processing portion 13 and input to a guard interval insertion processing portion 14.

FIG. 12 is a view illustrating GI insertion processing with respect to a superimposed signal obtained by superimposing spread signals having different data rates. Since respective signals DS1, DS2 a and DS3 are spread in an orthogonal spread code series, modulated data for each user can be reproduced on the receiver side even if these spread signals are superimposed. Therefore, even in case of such a superimposed signal as shown in the drawing, it is good enough to add a predetermined part of a rear portion of this superimposed spread signal string to a front portion of this spread signal string like Embodiment 1.

As described above, according to the transmitter apparatus and the communication system of this embodiment, in regard to a spread signal obtained by superimposing spread signals having integral-multiple data rates which are the same or different between a plurality of users, since a spread signal string in which n spread signals, the data rates of which are n times a reference data rate that is a predetermined data rate (where n is an integer equal to or greater than two), are arranged in series and a predetermined part of a rear portion of the generated spread signal string is added to a front portion of the spread signal string as a guard interval, it is possible to perform effective guard interval insertion processing which does not lower transmission efficiency. Further, since the present invention can be applied to a communication system in which signals having different data rates simultaneously exist, a future high-speed multimedia communication system can be easily and flexibly realized.

It is to be noted that the description has been given as to the case where the modulated data which is input to the spread processing portion 12 is input in parallel in this embodiment, the modulated data may comprise a serial bit string. In this case, it is good enough to provide a serial/parallel converting portion 31 before the spread processing portion 12 in the transmitter system as shown in FIG. 13, and provide a parallel/serial converting portion 48 after the reverse-spread processing portion 24 as shown in FIG. 14.

### Embodiment 3.

FIGS. 15A to C are views showing configurations of data frames according to Embodiment 3. Configurations equal or similar to those in Embodiment 1 shown in FIGS. 1 to 3 can be used for a transmitter system and a receiver system according to this embodiment. In FIG. 15A, a reference character T_{D} denotes a reference data symbol length, and corresponds to a length of an FFT interval processed in an FFT processing portion 42 of a frequency equalization processing portion 22 in the receiver system. That is, in a data frame shown in FIG. 15A, the number of samples used in FFT processing is equal to a spreading factor SF, and one chip subjected to spread processing corresponds to one sample which is a target of FFT processing. For example, assuming that a spreading factor of a spread signal is 128 and 32 chips are used as a guard interval, a data frame length is 160 chips and transmission factor in this example is 128/(128+32) = 0.8.

On the other hand, FIGS. 15B and 15C show configurations of data frames which realize processing without reducing transmission efficiency or without changing a cell radius of a communication cell even if a multi-path delay is long. For example, in FIG. 15B, a spread signal string whose length is two times an FFT interval is generated, and a guard interval whose length is two times that of the example shown in FIG. 15A is added in the generated spread signal string. A data frame length in this example corresponds to (128+32)×2 = 320 chips, and transmission efficiency is (128×2)/320 = 0.8. That is, even though the data frame length is increased, the transmission efficiency shown in the example of FIG. 15A can be maintained, thereby enhancing resistance properties with respect to multi-path delay.

Moreover, in FIG. 15C, a spread signal string whose length is three times the FFT interval, and a guard interval whose length is three time that of the example shown in FIG. 15A is added in the generated spread signal string. A data frame length in this example corresponds to (128+32)×3 = 480 chips, and transmission efficiency is (128×3)/480 = 0.8. That is, even though the data frame length is further increased, the transmission efficiency shown in the example of FIG. 15A can be maintained, thereby further enhancing resistance properties with respect to multi-path fading.

It is to be noted that a capacity of a memory or the like in which data must be temporarily stored needs to be increased in the receiver system to which such a data frame as shown in FIG. 15B or 15C is transmitted, but there is no influence on any other processing portions, and there is a merit that the existing processing portions in the receiver system can be used as they are without change.

It is to be noted that each of FIGS. 15B and 15C shows the example of adding the guard interval whose length is an integral multiple of the guard interval length as a reference (a reference guard interval length) depicted in FIG. 15A, but the guard interval is not restricted to a length of an integral multiple, and a value close to this integral multiple can be selected taking various design conditions into consideration.

As described above, according to the transmitter apparatus and the communication system of this embodiment, when a length of the guard interval is set to the reference guard interval length, the guard interval insertion processing portion provided in the transmitter apparatus generates a spread signal string in which m spread signals (m is an integral multiple equal to or greater than two) are arranged in series and adds a length which is substantially m times the reference guard interval to a front portion of the spread signal string as the guard interval length, thereby enhancing resistance properties with respect to multi-path delay without decreasing transmission efficiency.

### Embodiment 4.

Although the description has been given as to the guard interval insertion processing in the DS-CDMA transmission system in Embodiments 1 to 3, the same processing can be also realized in an OFDM transmission system. Therefore, guard interval processing in the OFDM transmission system will be described in this embodiment. It is to be noted that FIG. 16 is a block diagram illustrating an outline of processing of a transmitter system in OFDM transmission, and FIG. 17 is a block diagram illustrating an outline of processing of a receiver system in the OFDM transmission.

In the OFDM transmitter system shown in FIG. 16, modulated data is converted into a parallel signal by a serial/parallel converting portion 61, and input to an OFDM modulating portion 62. The OFDM modulating portion 62 generates an OFDM signal subjected to orthogonal modulation by IFFT processing. This OFDM signal is converted into a serial signal by a parallel/serial converting portion 63, then a guard interval is added to this serial signal in a guard interval insertion processing portion 64, and thereafter a resultant signal is transmitted from a transmission antenna 65.

On the other hand, in the OFDM receiver system shown in FIG. 17, the guard interval of a guard interval added signal received through a reception antenna 71 is removed by a guard interval removal processing portion 72. The signal from which the guard interval has been removed is converted into a parallel signal in a serial/parallel converting portion 73, and input to an OFDM demodulating portion 74. FFT processing using an orthogonal frequency is performed in the OFDM demodulating portion 74, and the signal is converted into a serial signal by a parallel/serial converting portion 75, thereby restoring the original modulated data.

FIG. 18 is a view conceptually showing a data configuration of an OFDM signal. Each of data strings (D1₁, D1₂, ..., D1ₘ) and (D2₁, D2₂, ... D2ₘ) shown in an upper part of the drawing is a data block which is a unit to which OFDM modulation is performed. (F1₁(f₁), F1₂(f₂) ... (F1ₘ(fₘ)) shown in a middle part of the drawing represents signals obtained by extending respective modulated data (D1₁, D1₂, ... D1ₘ) in a time axis direction and modulating sub-carriers having frequencies (f₁, f₂, ... fₘ). Each of data strings (F1₁ to F1ₘ) and (F2₁ to F2ₘ) shown in a lower part of the drawing represents a signal (OFDM signal) to which each signal shown in the middle part of the drawing is added.

FIG. 19A is a view showing a data frame of an OFDM signal generated by general guard interval insertion processing, and FIG. 19B is a view showing a data frame of an OFDM signal generated by guard interval insertion processing according to Embodiment 4. FIGS. 19A and B have the same transmission efficiency, but it is apparent that the transmission method shown in FIG. 19B has superior resistance properties with respect to multi-path delay since a length of a guard interval is doubled.

Meanwhile, the OFDM communication has been already come into practical use as a wireless LAN (IEEE 802.11). However, the OFDM communication has a problem that a system does not operate well when multi-path delay exceeding a guard interval exists. In the prior art, in case of increasing a speed of an OFDM communication system, a length of a guard interval must be reduced in order to increase a speed without lowering transmission efficiency. Therefore, a transmission distance must be sacrificed. However, according to the guard interval insertion processing of this embodiment, a transmission speed can be increased while maintaining a conventional transmission distance without lowering transmission efficiency.

It is to be noted that each of FIGS. 19A and 19B shows the example in which the guard interval whose length is an integral multiple of the guard interval length as a reference (the reference guard interval length) depicted in FIG. 19A is added, but the guard interval is not restricted to a length which is an integral multiple, and a value close to this integral multiple can be selected taking various design conditions into consideration.

As described above, according to the transmitter apparatus and the communication system of this embodiment, when a length of the guard interval is set to a reference guard interval length, the guard interval insertion processing portion provided in the transmitter apparatus determines a length which is substantially r times the reference guard interval length as a guard interval length (where r is an integer equal to or greater than two) and adds a part of a rear portion of an OFDM signal string in which r OFDM signals are arranged in series to a front portion of the OFDM signal string, thereby realizing an increase in a transmission speed while maintaining a conventional transmission distance without lowering transmission efficiency.

### Embodiment 5.

Although the guard interval insertion processing in the DS-CDMA transmission system has been described in Embodiments 1 to 3, the same processing can be likewise realized in an MC-CDMA transmission system. Therefore, guard interval processing in the MC-CDMA transmission system will be described in this embodiment. It is to be noted that FIG. 20 is a block diagram illustrating an outline of processing of a transmitter system in MC-CDMA transmission, and FIG. 21 is a block diagram illustrating an outline of processing of a receiver system in the MC-CDMA transmission.

In the MC-CDMA transmitter system shown in FIG. 20, modulated data is converted into parallel signals by a serial/parallel converting portion 81, and converted parallel signals (d₁ to d_{K}) are respectively input to copying portions 82₁ to 82_{K}. In the copying portions 82₁ to 82_{K}, SF sets (SF: a spreading factor) of the modulated data are copied, and input to spread processing portions 83₁ to 83_{K}. In the spread processing portions 83₁ to 83_{K}, the respective sets of modulated data are multiplied by orthogonal spread code series (Cᵢ(1) to Cᵢ(SF), i = 1 to K) of, e.g., W-K series codes to generate spread signals, and the generated signals are input to an IFFT processing portion 84. The IFFT processing portion 84 outputs signals subjected to IFFT processing using n sub-carriers, and these signals are then converted into serial signals by a parallel/serial converting portion 85, subsequently a guard interval is added by a guard interval insertion processing portion 86, and a result is transmitted from a transmission antenna 87.

On the other hand, in the MC-CDMA receiver system shown in FIG. 21, the guard interval of the guard interval added signal received through the reception antenna 91 is removed by a guard interval removal processing portion 92. The signal from which the guard interval has been removed is converted into parallel signals by a serial/parallel converting portion 93, and input to an FFT processing portion 94. The FFT processing portion 94 performs FFT processing with respect to multi-carrier signals, and reverse-spread processing portions 95₁ to 95_{K} perform reverse-spread processing which accumulates and adds orthogonal spread code series (Cᵢ*(1) to Cᵢ*(SF), i = 1 to K) which are complex-conjugate with the SF orthogonal spread code series (Cᵢ(1) to Ci(SF), i = 1 to K) respectively used in the sub-carrier transmission system, thereby outputting the original modulated data (dᵢ) through a parallel/serial converting portion 96.

As described above, in the MC-CDMA transmission system, the multi-carrier signal using the sub-carrier is transmitted in the transmitter system, and the FFT processing is carried out in the receiver system. Therefore, the same guard interval insertion processing as that in the DS-CDMA transmission system described in conjunction with Embodiments 1 to 3 can be applied to the transmitter apparatus and the communication system in the MC-CDMA transmission system, thereby obtaining the same advantages as those of the DS-CDMA transmission system.

It is to be noted that the description has been given as to the example where the spread processing portions 83₁ to 83_{K} multiply the respective sets of modulated data by the orthogonal spread code series of, e.g., W-H series codes to generate the spread signals in FIG. 20, but the spread signals generated in this example are not restricted to orthogonal spread codes, and they may be spread signals which are spread by using arbitrary spread codes.

As described above, according to the transmitter apparatus and the communication system of this embodiment, the guard interval insertion processing portion adds a predetermined part of a rear portion of an MC-CDMA signal string to a front portion of this MC-CDMA signal string as a guard interval, the MC-CDMA signal string having n MC-CDMA signals, the date rates of which are n times a reference data rate that is a predetermined data rate (where n is an integer equal to or greater than two), arranged therein in series, and hence the effective guard interval insertion processing can be carried out without lowering transmission efficiency. Further, since the present invention can be applied to a communication system in which signals having different data rates simultaneously exist, a future high-speed multimedia communication system can be readily and flexibly realized.

### Industrial Applicability

As described above, the present invention is useful as a transmitter apparatus and a communication system which can be applied in a mobile environment, and can greatly contribute to realization of a future high-speed multimedia communication system.

## Claims

1. A transmitter apparatus comprising a guard interval insertion processing portion and performing communication based on a predetermined transmission mode by using a data frame, the guard interval insertion processing portion generating the guard frame in which a predetermined part of a rear portion of a spread signal having a predetermined data rate is added to a front portion thereof as a guard interval, the spread signal being obtained by subjecting modulated data to spread modulation using a spread code,
wherein the guard interval insertion processing portion generates a spread signal string in which n spread signals, the data rates of which are n times a reference data rate that is the predetermined data rate (where n is an integer equal to or greater than two), are arranged in series, and adds a predetermined part of a rear chip of the generated spread signal string to a front portion of the spread signal string as a guard interval.

2. The transmitter apparatus according to claim 1, wherein the spread signal is a spread signal obtained by superimposing spread signals whose data rates are integral multiples which are equal to each other or different from each other between a plurality of users.

3. The transmitter apparatus according to claim 1, wherein the spread signal is a spread signal obtained by superimposing spread signals whose data rates are integral multiples which are equal to each other or different from each other between a plurality of applications.

4. The transmitter apparatus according to one of claims 1 to 3, wherein the predetermined transmission mode is a DS-CDMA transmission mode.

5. A base station apparatus comprising the transmitter apparatus according to claim 1 or 2.

6. A mobile station apparatus comprising the transmitter apparatus according to claim 1 or 3.

7. The base station apparatus according to claim 5, wherein the predetermined transmission mode is a DS-CDMA transmission mode.

8. The mobile station apparatus according to claim 6, wherein the predetermined transmission mode is a DS-CDMA transmission mode.

9. A communication system comprising:
a transmitter apparatus which comprises a guard interval insertion processing portion and transmits a DS-CDMA signal by using a generated data frame, the guard interval insertion processing portion generating the data frame in which a predetermined part of a rear portion of a spread signal having a predetermined data rate is added to a front portion thereof as a guard interval, the spread signal being obtained by subjecting modulated data to spread modulation using a spread code; and
a receiver apparatus which receives the DS-CDMA signal transmitted from the transmitter apparatus, generates a spread signal in which the guard interval is removed from the received DS-CDMA communication signal, and performs frequency equalization processing based on FFT processing with respect to the generated spread signal with an inverse number of the predetermined data rate being determined as an FFT interval length,
wherein the guard interval insertion processing portion generates a spread signal string in which n spread signals, the data rates of which are n times a reference data rate that is the predetermined data rate (where n is an integer equal to or greater than two), are arranged in series, and adds a predetermined part of a rear portion of the generated spread signal string to a front portion of the spread signal string as a guard interval.

10. The communication system according to claim 9, wherein the spread signal is a spread signal obtained by superimposing spread signals whose data rates are integral multiples which are equal to each other or different from each other between a plurality of users.

11. The communication system according to claim 9, wherein the spread signal is a spread signal obtained by superimposing spread signals whose data rates are integral multiples which are equal to each other or different from each other between a plurality of applications.

12. A communication system comprising:
the base station apparatus according to claim 5; and
a mobile station apparatus having the receiver apparatus according to claim 9.

13. The communication system according to claim 12, wherein the spread signal is a spread signal obtained by superimposing spread signals whose data rates are integral multiples which are equal to each other or different from each other between a plurality of users.

14. A communication system comprising:
the mobile station apparatus according to claim 6; and
a base station apparatus having the receiver apparatus according to claim 9.

15. The communication system according to claim 14, wherein the spread signal is a spread signal obtained by superimposing spread signals whose data rates are integral multiples which are equal to each other or different from each other between a plurality of applications.

16. The transmitter apparatus according to claim 1, wherein, assuming that a length of the guard interval is a reference guard interval length, the guard interval insertion processing portion generates a spread signal string in which the m spread signals (where m is an integral multiple equal to or greater than two) are arranged in series, and determines a length which is m times the reference guard interval length as a guard interval length with respect to the generated spread signal string.

17. The communication system according to claim 9, wherein, assuming that a length of the guard interval is a reference guard interval length, the guard interval insertion processing portion generates a spread signal string in which the m spread signals (where m is an integral multiple equal to or greater than two) are arranged in series, and determines a length which is m times the reference guard interval length as a guard interval length with respect to the generated spread signal string.

18. A base station apparatus comprising the transmitter apparatus according to claim 16.

19. A mobile station apparatus comprising the transmitter apparatus according to claim 16.

20. A transmitter apparatus comprising a guard interval insertion processing portion and performing communication based on an MC-CDMA transmission mode using a generated data frame, the guard interval insertion processing portion performing serial/parallel conversion with respect to a spread signal obtained by subjecting modulated data to spread modulation using a spread code, and generating the data frame in which a predetermined part of a rear portion of a multi-carrier signal having a predetermined data rate to a front portion thereof as a guard interval, the multi-carrier signal being generated by modulating a plurality of sub-carriers,
wherein the guard interval insertion processing portion generates a multi-carrier signal string in which n multi-carrier signals, the data rates of which are n times a reference data rate that is the predetermined data rate (where n is an integer equal to or greater than two), are arranged in series, and adds a predetermined part of a rear portion of the generated multi-carrier signal string to a front portion of the multi-carrier signal string as a guard interval.

21. The transmitter apparatus according to claim 20, wherein the spread signal is a spread signal obtained by superimposing spread signals whose data rates are integral multiples which are equal to each other or different from each other between a plurality of users.

22. The transmitter apparatus according to claim 20, wherein the spread signal is a spread signal obtained by superimposing spread signals whose data rates are integral multiples which are equal to each other or different from each other between a plurality of applications.

23. A base station apparatus comprising the transmitter apparatus according to claim 20 or 21.

24. A mobile station apparatus comprising the transmitter apparatus according to claim 20 or 22.

25. A transmitter apparatus comprising a guard interval insertion processing portion and performing communication based on an OFDM transmission mode using a generated data frame, the guard interval insertion processing portion generating the data frame in which a predetermined part of a rear portion of an OFDM signal having a predetermined FFT interval length is added to a front portion thereof as a guard interval, the OFDM signal being generated by performing serial/parallel conversion with respect to a modulated data string and modulating a plurality of orthogonal sub-carriers,
wherein, assuming that a length of the guard interval is a reference guard interval length,
the guard interval insertion processing portion generates an OFDM signal string in which the r OFDM signals (where r is an integer equal to or greater than two) are arranged in series, and adds a part of a rear portion of the OFDM signal string to a front portion of the OFDM signal string as a guard interval with a length which is substantially r times the reference guard interval length being determined as a guard interval length with respect to the generated OFDM signal string.
